# EUROPÄISCHE PATENTANMELDUNG

(11) **EP 1 154 349 A2**
(43) Veröffentlichungstag der Anmeldung: **14.11.2001**
(21) Anmeldenummer: 01890072.0
(22) Anmeldetag: 13.03.2001
(51) Int. Cl.: G06F 5/06

(54) **Verfahren und Vorrichtung zum Auswerten von Messdaten**

(30) Priorität: 21.03.2000 AT 2122000 U
(71) Anmelder: AUSTRIA MIKRO SYSTEME INTERNATIONAL AKTIENGESELLSCHAFT, A-8141 Unterpremstätten (AT)
(72) Erfinder: Prantl, Anton, 8042 Graz (AT); Schwemmlein, Jörg, 8010 Graz (AT)
(74) Vertreter: Haffner, Thomas M., Dr.

(57) **Zusammenfassung**

Bei einem Verfahren zum Auswerten von Meßdaten, bei welchen die Meßdaten digitalisiert (ADC) und die digitalisierten Meßdaten einem Prozessor (8) (DSP) weitergegeben, in diesem Prozessor (8) verarbeitet und die Ergebnisse ausgegeben werden, wird so vorgegangen, daß die digitalisierten Meßwerte in einem Schieberegister (7), insbesondere einem FIFO-Speicher, bis zum Abschluß der Erfassung aller gleichzeitig zu verarbeitenden Meßdaten zwischengespeichert werden und gemeinsam ausgelesen werden, worauf nach Auslesen aller für die Verarbeitung notwendigen Speicherwerte die Berechnung der Ergebnisse im Prozessor (8) vorgenommen wird.

Bei einer Vorrichtung zur Ermittlung von Meßwerten aus Meßdaten mit wenigstens einem ADC (1) und einem Rechner (8) zur digitalen Signalverarbeitung (DSP) ist zwischen ADC (1) und DSP (8) ein Schieberegister (7) angeordnet.

## Beschreibung

Die Erfindung bezieht sich auf ein Verfahren zum Auswerten von Meßdaten, bei welchen die Meßdaten digitalisiert (ADC) und die digitalisierten Meßdaten einem Prozessor (DSP) weitergegeben, in diesem Prozessor verarbeitet und die Ergebnisse ausgegeben werden sowie auf eine Vorrichtung zur Durchführung dieses Verfahrens.

Bei elektronischen Meßeinrichtungen, bei welchen verschiedene Meßsignale miteinander verknüpft werden und elektronisch ausgewertet werden, wie beispielsweise bei Meßgeräten für die Messung der elektrischen Leistung, bestimmen hauptsächlich eine Reihe von Randbedingungen die Qualität derartiger Einrichtungen. Es ist daher wesentliches Ziel bei der Realisation derartiger Meßgeräte die Anforderungen an den Stromverbrauch zu verringern. Der Stromverbrauch derartiger Einrichtungen ist in hohem Maße von der Taktrate digitaler Schaltungen bestimmt, wobei eine Senkung der Taktrate gleichzeitig das Rauschen derartiger Geräte verringern könnte und eine höhere Genauigkeit im Bereich der analogen Bauteile derartiger Schaltungsanordnungen erzielen ließe.

Am Beispiel eines Dreiphasenleistungsmeßgerätes wird aber nun klar ersichtlich, daß ohne grundsätzliche Änderungen in der Schaltungsanordnung die Taktrate nicht ohne weiteres gesenkt werden kann. Für die Erfassung von Meßdaten sind in einem derartigen Gerät sechs analoge Digitalwandlungen (ADC) erforderlich, wobei hier jeweils die Meßdaten für Strom und Spannung für alle drei Phasen in digitale Signale umgewandelt werden müssen. Diese Vorgänge müssen in einer Sample-Periode ablaufen, wobei sie in typischer Weise Phase für Phase vorgenommen werden, sodaß drei Interrupts innerhalb einer Sample-Periode erforderlich sind. Während der ersten beiden Interrupts können die gesampelten Meßdaten nur gespeichert werden, worauf die digitale Signalverarbeitung in einer CPU bzw. einem digitalen Signalprozessor (DSP) vorgenommen werden kann. Aus dieser Überlegung ergibt sich, daß jeweils zweimal eine vollständige Stapelverarbeitung erforderlich ist. Mit dem dritten Interrupt kann die Berechnung basierend auf allen aktuellen Werten begonnen werden. Der erforderlichen Rechenvorgänge sind von geringer Komplexität und es sind eine Reihe von voneinander verschiedenen und kleinen Berechnungsschritten erforderlich: Um effektive Werte zu gewinnen, müssen die Spannungs- und Strommeßwerte quadriert werden und um Leistungsmeßwerte auszugeben müssen die aktuellen Spannungs- und die aktuellen Stromwerte miteinander multipliziert werden. Analoges gilt für andere Arten der Berechnung, wobei alle diese Berechnungen erfordern, daß sie dreimal vorgenommen werden müssen, sodaß ein hoher Overhead für das Speichern und Auslesen der Daten die Folge ist.

In rechnergestützten Anwendungen werden verschiedene Arten von Speichern bzw. Zwischenspeichern eingesetzt, wobei häufig sog. Direct Memory Acess Contoller (DMA) eingesetzt werden. Derartiger Dynamic RAM Controller stellen zusätzliche Schaltungen dar, wie sie für den Betrieb von dynamischen RAMs erforderlich sind. Bei einem normalen Speicherzugriff muß die Adresse in zwei aufeinander folgenden Schritten in das RAM geladen werden, wobei es weiters erforderlich ist, um einen Datenverlust zu vermeiden, alle Zellenadressen in einer vorbestimmten Zeit mindestens einmal aufzurufen. Wenn die Speicherinhalte nicht zyklisch ausgelesen werden, sind Schaltungszusätze notwendig, die zyklische Adressierung zwischen den normalen Speicherzugriffen bewirken. Derartige Dynamic RAM Controller müssen regelmäßig einen sog. Refresh vornehmen, bei welchen alle Zeilenadressen innerhalb der vorgegebenen Zeit einmal angesprochen werden, wodurch sich die Verfügbarkeit des Speichers geringfügig verringert. Für die zeitliche Aufteilung des Refreshs sind verschiedene Methoden bekannt, wobei insbesondere das Verfahren des "Cycle Steeling" oder das Verfahren einer transparenten bzw. "Hidden Refresh" angewandt wird. Beim Cycle Steeling muß der Prozessor nach vorbestimmten Zeiten, wie beispielsweise acht Mikrosekunden, für einen Zyklus angehalten werden und einen Refreshschritt ausführen, um die entsprechende Ladung wiederum anlegen zu können, da dynamische RAMs dann, wenn die Ladung nicht neuerlich angelegt wird, ihren Speicherinhalt verlieren. Insgesamt sind für derartige Ausbildungen relativ aufwendige elektronische Bauteile erforderlich.

Eine weitere in Standardarchitekturen eingesetzte Ausbildung sind sog. Dual Port Memories, welche auch als Zweitorspeicher bezeichnet werden. Derartige Zweitorspeicher sind spezielle RAMs, die es zwei unabhängigen Prozessen ermöglichen auf gemeinsame Daten zuzugreifen. Es soll somit ein Datenaustausch zwischen den beiden Prozessen ermöglicht werden, wofür ein derartiger Zweitorspeicher zwei getrennte Sätze von Adreß-, Daten- und Steuerleitungen besitzen muß. Auch dieses Pinzip läßt sich naturgemäß nicht ohne Einschränkungen realisieren, da es prinzipiell unmöglich ist, gleichzeitig von beiden Toren in dieselbe Speicherzelle zu schreiben. Bei den sog. "Read-While-Write-Speichern" wird dieses Problem dadurch umgangen, daß an einem der beiden Tore nur geschrieben wird und am anderen nur gelesen. Es sind dabei in jedem Fall zwei getrennte Adreßdecoder erforderlich, die es ermöglichen gleichzeitig auf eine Adresse zu schreiben und auf einer anderen zu lesen. Für die Vermeidung von Zugriffskonflikten sind in diesem Zusammenhang auch noch weitere relativ komplexe Schaltungen vorgeschlagen worden, wie sie beispielsweise als "Prioritäts-Decoder (Arbitter)" bezeichnet werden, welche bei überlappenden Speicherzugriffen einen der beiden Prozesse über ein Read-Signal vorübergehend anhalten. Insgesamt erfordern alle diese Schaltungen eine relativ hohe Taktrate des Prozessors und aufwendige, entsprechend teurere, Speicherbauteile.

Die Erfindung zielt nun darauf ab, ein Verfahren der eingangs genannten Art sowie eine Vorrichtung zur Durchführung dieses Verfahrens vorzuschlagen, bei welchem mit kostengünstigen Speicherbausteinen das Auslangen gefunden wird und gleichzeitig die Taktrate und damit der Stromverbrauch der Einrichtung herabgesetzt werden kann. Zu diesem Zweck ist das erfindungsgemäße Verfahren im wesentlichen dadurch gekennzeichnet, daß die digitalisierten Meßwerte in einem Schieberegister, insbesondere einem FIFO-Speicher, bis zum Abschluß der Erfassung aller gleichzeitig zu verarbeitenden Meßdaten zwischengespeichert werden und gemeinsam ausgelesen werden, worauf nach Auslesen aller für die Verarbeitung notwendigen Speicherwerte die Berechnung der Ergebnisse im Prozessor vorgenommen wird. Dadurch, daß als Speicher ein Schieberegister eingesetzt wird, lassen sich die Samplewerte gemeinsam gewinnen, wobei lediglich ein Interrupt generiert wird, wenn das Schieberegister voll ist. In der Folge erfolgt ein Blocktransfer aller im Schieberegister enthaltenen Speicherinhalte in den Speicher des Rechners (DSP-Memory), wodurch die Anzahl der Rechenschritte drastisch verringert wird. Die Blockverarbeitung erlaubt es auch Zusatzfunktionen, wie beispielsweise die Berücksichtigung von Filterkoeffizienten, durch lediglich einmalige Eingabe zu berücksichtigen.

Prinzipiell lassen sich RAMs als Schieberegister betreiben, wenn man die Adressen zyklisch durchzählt. Es werden somit bei jeder Adresse zunächst die gespeicherten Daten ausgelesen und anschließend die neuen Daten eingelesen. Prinzipiell sind unterschiedliche Ausbildungen derartiger Schieberegister bekannt geworden, wobei sich als besonders vorteilhaft sog. First-In-First-Out Memories (FIFO) erwiesen haben. Bei einem FIFO erscheinen die Daten in derselben Reihenfolge am Ausgang wie sie eingegeben wurden. Das zuerst eingelesene Wort wird auch wieder zuerst ausgelesen. Bei einem FIFO kann dieser Vorgang, zum Unterschied von gewöhnlichen Schieberegistern, völlig asynchron erfolgen und es ist daher der Auslesetakt unabhängig vom Einlesetakt. FIFOs können daher besonders bevorzugt zur Kopplung asynchroner Systeme eingesetzt werden. Die Funktion ist dabei ähnlich wie die einer Warteschlange. Die Daten wandern nicht mehr mit einem festen Takt vom Eingang zum Ausgang, sondern warten nur solange im Register bis alle vorhergehenden Daten ausgegeben sind. Bei der Eingabe werden die Daten bis zum niedrigsten freien Speicherplatz weitergereicht und von dort mit dem Auslesetakt zum Ausgang verschoben. Die Durchlaufzeit kann hiebei durch spezielle Ausbildungen, wie beispielsweise die Ausbildung eines FIFOs als Ringspeicher, wesentlich verringert werden. Mit Rücksicht auf die wesentlich geringere Anzahl von Rechenschritten, welche zur vollständigen Auswertung erforderlich sind, kann die Taktrate des Prozessors wesentlich abgesenkt werden, wodurch der Stromverbrauch und das Rauschen wesentlich herabgesetzt werden können.

Die erfindungsgemäße Vorrichtung zur Ermittlung von Meßwerten aus Meßdaten mit wenigstens einem Analogdigitalkonverter und einem Rechner zur digitalen Signalverarbeitung ist im wesentlichen dadurch gekennzeichnet, daß zwischen ADC und DSP ein Schieberegister angeordnet ist, wobei mit Vorteil die Ausbildung so getroffen ist, daß das Schieberegister als FIFO-Memory ausgebil det ist.

Durch die Verwendung einer derartigen FIFO-Memory wird zunächst die Anzahl von Interrupts signifikant verringert, woraus sich ergibt, daß ein wesentlich geringerer Rechenaufwand für typische Rechenvorgänge, wie die Blockverarbeitung, erforderlich ist. Der Rechner kann somit mit wesentlich geringerer Taktrate arbeiten, wobei der jeweilige Aufwand für die Zwischenspeicherung von Zwischenergebnissen gleichfalls wesentlich verringert wird. In einer typischen Anwendung kann ein FIFO zehn Samplewerte aller sechs Meßwerte der ADCs, wie im Falle eines Leistungsmeßgerätes sammeln. Sobald der FIFO gefüllt ist, wird ein Interrupt generiert, welcher den Blocktransfer von sechzig Speicherinhalten in den DSP-Speicher auslöst, wodurch bereits klar ersichtlich ist, daß der Rechenaufwand für die Stapelverarbeitung sich auf ein Sechzigstel reduziert.

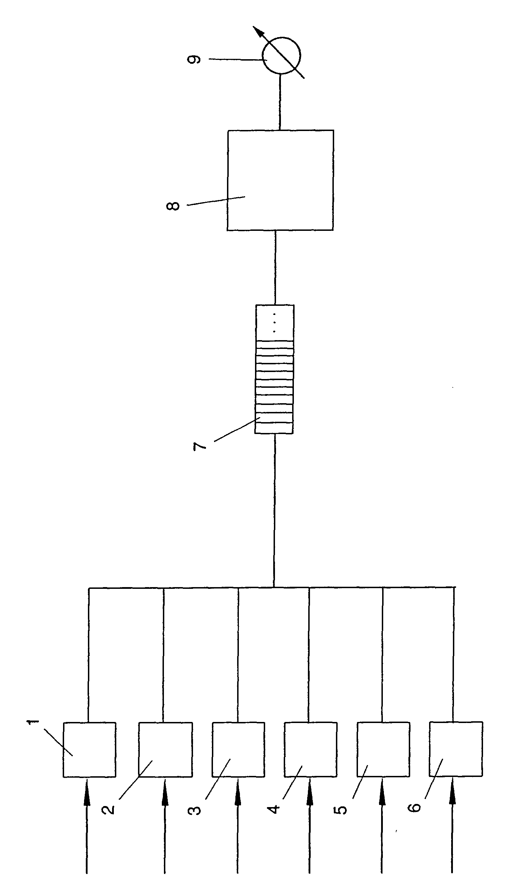

In der Zeichnung ist eine Vorrichtung zur Ermittlung von Meßwerten aus jeweils sechs analogen Meßdaten schematisch erläutert. Mit 1, 2, 3, 4, 5 und 6 sind Analogdigitalwandler (ADC's) dargestellt, welchen die analogen Signale als Eingang zur Verfügung stehen. In diesen ADC's werden die Signale in digitale Werte umgewandelt und in einem FIFO-Schieberegister 7 abgelegt. Mit 8 ist der Rechner, d.h. die CPU mit dem zugehörigen Speicher bezeichnet, welche die Berechnungen zur digitalen Signalverarbeitung durchführt. Der Rechner kann daher auch DSP bezeichnet werden. Das Ergebnis dieser Berechnungen kann über ein Meßinstrument 9 angezeigt werden, wobei die Anzeige unmittelbar als digitale Anzeige erfolgen kann. Das Ergebnis der Berechnung kann aber auch für weitere Steuer- oder Regelzwecke in digitaler Form unmittelbar weiterverwendet werden.

## Patentansprüche

1. Verfahren zum Auswerten von Meßdaten, bei welchen die Meßdaten digitalisiert (ADC) und die digitalisierten Meßdaten einem Prozessor (DSP) (8) weitergegeben, in diesem Prozessor (8) verarbeitet und die Ergebnisse ausgegeben werden, **dadurch gekennzeichnet, daß** die digitalisierten Meßwerte in einem Schieberegister (7), insbesondere einem FIFO-Speicher, bis zum Abschluß der Erfassung aller gleichzeitig zu verarbeitenden Meßdaten zwischengespeichert werden und gemeinsam ausgelesen werden, worauf nach Auslesen aller für die Verarbeitung notwendigen Speicherwerte die Berechnung der Ergebnisse im Prozessor (8) vorgenommen wird.

2. Vorrichtung zur Ermittlung von Meßwerten aus Meßdaten mit wenigstens einem ADC (1) und einem Rechner (8) (DSP) zur digitalen Signalverarbeitung, **dadurch gekennzeichnet, daß** zwischen ADC (1) und DSP (8) ein Schieberegister (7) angeordnet ist.

3. Vorrichtung nach Anspruch 2, **dadurch gekennzeichnet, daß** das Schieberegister (7) als FIFO Memory ausgebildet ist.
